# FASCICULE DE BREVET EUROPEEN

(11) **EP 0 667 699 B1**
(45) Date de publication et mention de la délivrance du brevet: **08.08.2001**
(21) Numéro de dépôt: 95400297.8
(22) Date de dépôt: 13.02.1995
(51) Int. Cl.: H04L 29/06

(54) **Procédé de traitement de données issues d'une couche d'adaptation à la transmission selon un mode de transfert asynchrone de type ATM**
Verfahren zur Verarbeitung von Daten von einer Anpassungsschicht während der Übertragung gemäss einem asynchronen ATM-Übertragungsmodus.
Method to process data of the adaptation layer during the transmission according to an asynchronous transfer mode

(30) Priorité: 14.02.1994 FR 9401643
(43) Date de publication de la demande: 16.08.1995
(73) Titulaire: FRANCE TELECOM, 75015 Paris (FR)
(72) Inventeur: Le Guigner, Marc, Cabinet Ballot-Schmit, F-94230 Cachan (FR); De Hauteclocque, Gaelle, Cabinet Ballot-Schmit, F-94230 Cachan (FR); Bourbao, Michel, Cabinet Ballot-Schmit, F-94230 Cachan (FR)
(74) Mandataire: Schmit, Christian Norbert Marie

(56) Documents cités:
- WO-A-88/07293
- US-A- 5 136 584
- SIGCOMM 88 SYMPOSIUM: COMMUNICATION ARCHITECTURES AND PROTOCOLS, 16 Août 1988, STANFORD ,CA.,USA pages 134 - 145 C. SONG ET AL. 'Optimizing bulk data transfer performance: a packet train approach.'

## Description

La présente invention concerne un procédé de traitement de données appelées cellules, issues de la couche d'adaptation pour le transfert selon un mode de transmission asynchrone de type ATM (Asychronus Transfert Mode).

On rappelle que la transmission en mode ATM se fait par transfert de blocs d'information de longueur constante. La quantité élémentaire d'information utile transmise est de 48 octets, le bloc d'information transmis en ATM est dénommé cellule et identifié par une étiquette de 5 octets appelée en-tête. La longueur totale d'une cellule est donc de 53 octets. On rappelle également que le protocole de transmission selon un mode asynchrone tel que le mode ATM fait appel à différentes couches pour le transport des informations et, notamment, à une couche d'adaptation au mode ATM telle que la couche AAL5 définie par les recommandations I362 et I363 du CCITT.

La couche d'adaptation permet à l'émission, de découper un message en morceaux transportables par des cellules ATM puis, à la réception, de récupérer les cellules constitutives d'un même message parmi le flux des cellules ATM reçues afin de reconstruire le message.

La réception du flux ATM se fait au moyen d'un terminal de réception apte à traiter les cellules afin de reconstituer les messages et de pouvoir les exploiter. Les terminaux d'émission/réception actuels réalisent cette segmentation et ce réassemblage de messages dans une pré-mémoire de travail. Une fois un message reçu, traité et réassemblé, le processeur du terminal récepteur en est informé et doit réaliser le retransfert dudit message dans sa propre mémoire pour pouvoir l'exploiter. Ce type de réalisation est relativement simple à concevoir mais, impose une étape de transfert supplémentaire aux données avec toutes les ressources matérielles additionnelles qu'il convient, c'est à dire, des mémoires intermédiaires, des dispositifs de lecture/écriture et de contrôle.

On pourra se reporter à l'état de la technique le plus proche constitué par le document US-A-5 136 584 qui divulgue un procédé de traitement de données reçues d'un réseau du type ATM. Dans le terminal de réception les données sont mémorisées dans une zone de mémoire de taille maximum fixe.

La présente invention a pour but de remédier à ces inconvénients. Elle a pour objet un procédé de traitement des données qui permet d'obtenir un réassemblage des cellules en message directement dans la mémoire de travail du processeur hôte (c'est à dire du terminal de réception) et cela sans étape intermédiaire. Les données constitutives du message sont stockées continûment selon l'invention dans cette mémoire au fur et à mesure de la réception sur le canal ATM. Ainsi, l'invention permet de réaliser une fonction de réassemblage des cellules d'un même message en économisant une étape intermédiaire de recopie de données. Les données des messages sont de plus directement exploitables par le processeur du terminal, sans aucune opération supplémentaire de remise en ordre.

Un autre objet de l'invention est également d'optimiser la gestion de la mémoire.

Selon l'invention, les cellules sont sélectionnées en fonction de leur champ VPI/VCI pour les mémoriser soit dans une zone réservée aux messages courts, soit dans une zone réservée aux messages longs de cette mémoire. Un emplacement est alors réservé dans l'une de ces zones.

La présente invention a plus particulièrement pour objet un procédé de traitement de données issues d'une couche d'adaptation à la transmission de messages se présentant sous la forme d'un flux de cellules au moyen d'un réseau de transfert asynchrone de type ATM, les cellules comportant un en-tête suivi d'un champ information, principalement caractérisé en ce que les cellules sont reçues par un terminal récepteur ayant une mémoire de travail et en ce qu'il comporte les étapes suivantes :
- Réserver un emplacement dans la mémoire de travail du terminal, d'une taille maximale donnée,
- Enregistrer de façon continue les cellules constitutives d'un même message à cet emplacement.

Selon une autre caractéristique de l'invention, la mémoire de travail est divisée en au moins deux zones mémoire et les cellules sont sélectionnées en fonction du contenu de leur champ VPI/VCI pour être stockées dans l'une de ces zones.

Selon une autre caractéristique de l'invention, la réservation de l'emplacement consiste à définir une adresse de début et une adresse de fin et,à enregistrer ces adresses dans des champs de contrôle d'adresse.

Selon une autre caractéristique de l'invention, l'enregistrement en continu comprend les étapes suivantes:
- Enregistrer au fur et à mesure de la réception, dans une zone mémoire, un contexte réception des cellules comportant le contenu des champs d'en-tête,
- Identifier la cellule en cours de réception, par lecture des champs d'en-tête et comparaison de leur contenu au contenu des champs de messages déjà en cours de réception pour savoir si la cellule est une cellule de début,de continuation ou de fin de message,
- Transférer les données de la cellule dans la mémoire à l'emplacement indiqué par le contenu des champs de contrôle d'adresse.

Selon une autre caractéristique, on associe les champs de contrôle aux champs d'en-tête enregistrés formés des champs chemin virtuel (VPI), voie virtuelle (VCI) et indicateur de type (PT).

Selon une autre caractéristique, les champs de contrôle créés comprennent :
- un champ d'adresse pour contenir l'adresse de début d'un emplacement mémoire,
- un champ d'adresse pour contenir l'adresse de fin de cet emplacement mémoire,
- un champ décompteur associé à la taille de l'emplacement mémoire réservé pour contrôler la fin de réception du message,
- un champ de temporisation incrémenté à une valeur donnée et décrémenté par une horloge pour terminer la réception dans le cas ou l'information de fin est perdue,
- un champ de drapeau d'erreur pour indiquer l'apparition d'anomalies sur le message.

La présente invention sera mieux comprise à l'aide de la description qui va suivre, donnée à titre d'exemple illustratif et non limitatif et, qui est faite en regard des dessins sur lesquels :
- La figure 1 représente le format d'une cellule transmise selon le mode de transfert asynchrone tel que le mode ATM,
- La figure 2 représente le format d'un message à transmettre au niveau de la sous-sous-couche CPCS de transfert de données,
- La figure 3 représente le format des messages à transmettre après passage dans la sous-couche SAR d'adaptation au mode ATM,
- La figure 4 représente la couche de transfert ATM,
- La figure 5 représente de façon plus détaillée le format du message dans la sous-sous-couche CPCS,
- La figure 6 représente de façon plus détaillée le format du message dans la sous-couche d'adaptation SAR,
- La figure 7 représente les étapes essentielles du procédé conforme à l'invention,
- La figure 8 représente les étapes permettant d'enregistrer de façon continue les cellules d'un même message,
- La figure 9 représente les étapes permettant d'enregistrer de façon continue les cellules d'un même message dans le cas de cellules de continuité ou de- fin de message.

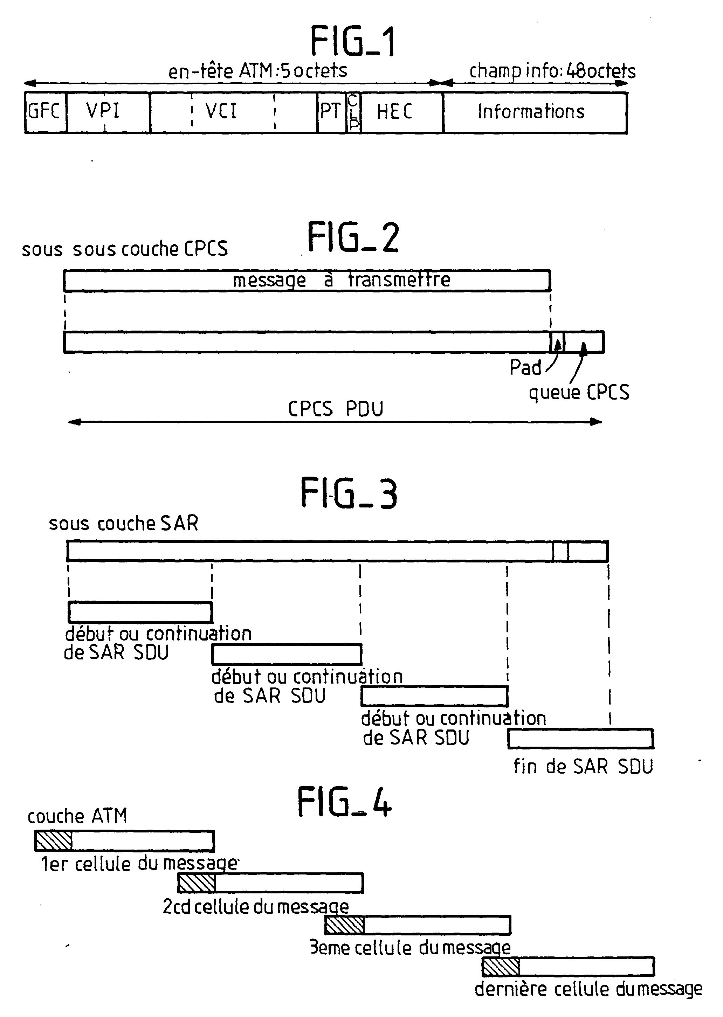

On rappelle que la technique de transmission en mode ATM est basée sur la transmission des informations à l'aide de paquets de données de longueur fixe appelées cellules. Chaque cellule possède un champ d'en-tête de 5 octets et un champs d'information de 48 octets selon le format qui a été représenté sur la figure 1. Les numéros de conduits virtuels et de voies virtuelles sont contenus dans les champs VPI et VCI de la cellule. La cellule comporte en outre un indicateur de type de cellule contenu dans le champ PT (Payload Type) et un indicateur de priorité CLP (Cell Loss Priority). Le champ HEC correspond à un code correcteur d'erreurs.

L'adaptation en mode ATM réalisée par la couche AAL5, consiste pour un message, tel que représenté sur la figure 2, à principalement, ajouter des champs d'information à la fin de ce message à travers une sous-sous-couche dénommée CPCS.

L'ensemble de ces champs est nommé : queue CPCS. Le champ PAD permet uniquement de rajouter des octets dits de bourrage pour aligner le champ ainsi obtenu CPCS PDU à un multiple de 48 bits.

L'ensemble CPS PDU est ensuite découpé pour former les segments de la sous-couche SAR. La sous-couche SAR est représentée sur la figure 3.

Ces segments sont ensuite mis au format ATM par le passage dans la couche ATM qui consiste à rajouter un en-tête ATM à chacun d'eux. Chaque ensemble d'information ainsi obtenu constitue des cellules selon le format ATM.

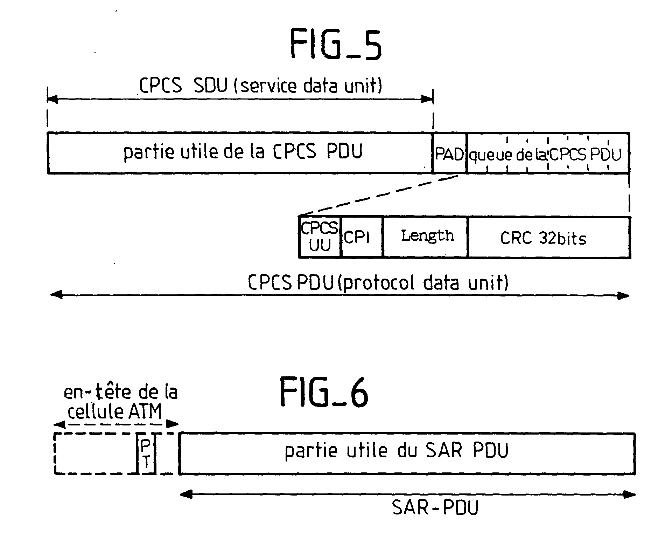

On va maintenant détailler le format de la sous-sous-couche CPCS telle que représentée à la figure 5. Le message à transmettre se trouve dans le champ partie utile de cette couche, ce champ étant dénommé CPCS SDU. Le champ queue CPCS PDU comporte les champs suivants:
- **CPCS UU**: **(CPCS User-to-user indication, 1 octet) :**
Champ transparent au CPCS et destiné à transférer des informations d'usager à usager.
- **CPI**: **(Common part indicator, 1 octet) :**
Utilisé pour établir la valeur de certains champs du CPCS PDU.
- **Length**: **(Length of CPCS SDU, 2 octets) :**
Ce champ donne la taille de la partie utile du CPCS PDU. Il est utilisé par le récepteur pour détecter la perte ou le gain d'informations.
- **CRC**: **(Cyclic Redundancy Check, 4 octets) :**
Ce champ donne la valeur du CRC 32 bits calculée sur le contenu complet de la CPCS-PDU, incluant la partie utile, le champ PAD et les 4 premiers octets de la queue du CPCS-PDU).

La figure 6 représente d'une façon détaillée la sous-couche SAR.

Comme cela a été dit, le CPCS PDU, correspondant au message à émettre, est tronçonné en une suite de SAR SDU qui seront elles-mêmes insérées dans les parties utiles des SAR PDU.
- Le champ: PT (Payload type, 3 bits) :
Ce champ PT appartient à l'en-tête ATM et, donc, se réfère à la couche ATM. La couche AAL5 utilise cependant le paramètre AUU de ce champ PT (ATM-layer-User-to-ATM-layer-User indication) pour déterminer si la cellule est une fin de message ou non.
Le codage est :
- 0X0 pour début ou suite de message,
- 0X1 pour fin de message

Les 48 octets du SAR PDU constituent le champ d'information de la cellule ATM.

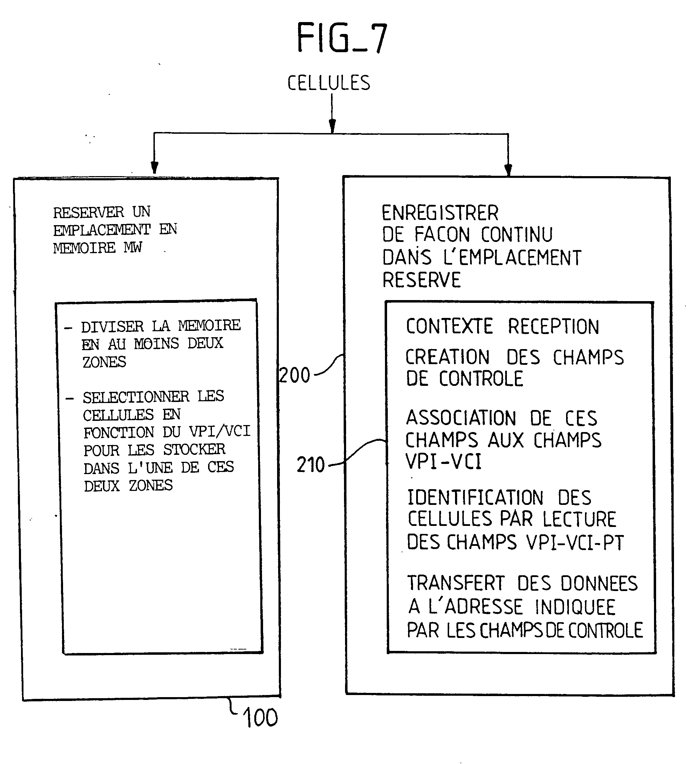

La description qui va suivre maintenant est faite en regard des figures 7 à 9.

Selon le procédé conforme à l'invention, on réassemble les cellules en message directement dans l'une des zones réservés de la mémoire MW du processeur hôte MP, encore dénommé terminal de réception TR, sans étape intermédiaire. Les données constitutives du message sont stockées continûment dans l'une des zones de cette mémoire au fur et à mesure de la réception sur le canal C (ATM).

Ainsi, la fonction de réassemblage est réalisée en économisant une étape intermédiaire de recopie des données comme cela était le cas dans l'état de la technique. Les données des messages sont de plus directement exploitables par le processeur hôte sans aucune opération supplémentaire de remise en ordre.

Les étapes essentielles du procédé selon l'invention sont représentées par les blocs 100 et 200 de la figure 7.

A cette fin, conformément au procédé de l'invention, le réassemblage consiste tout d'abord à pré-réserver (bloc 100) un emplacement mémoire de taille donnée correspondant à la taille maximale d'un message dans une zone ZM de la mémoire MW du système hôte TR en début de réception de chaque message.

Le champ VPI/VCI permet de connaître la taille maximum du message car il donne son origine. En effet, lorsque le champ VPI/VCI correspond au protocole du réseau Ethernet, le message peut être de 1500 octets, 4510 octets pour le protocole FDDI et 1600 pour le protocole de Frame relay.

L'une des zones permet par exemple de stocker les messages longs correspondant au protocole du réseau Ethernet et l'autre zone permet de stocker les messages courts correspondant aux autres protocoles.

Pour réaliser un enregistrement continu (bloc 200), on enregistre un contexte réception CTX du message dans une zone mémoire REC de l'ensemble réception R. Ce contexte réception comporte le contenu des champs de l'en-tête ATM à savoir : VPI, VCI, PT. Puis, on crée des champs de contrôle que l'on associe au message et qui vont permettre au terminal de réception d'assurer l'enregistrement en continu des cellules de ce message (bloc 200). On identifie une cellule par lecture du couple VPI/VCI et comparaison avec les couples enregistrés se trouvant déjà dans le contexte réception. On examine le contenu du champ PT pour savoir si la cellule est une cellule de fin de message ou non.

On réalise ensuite des traitements distincts sur les champs de contrôle selon qu'il s'agit d'une cellule de fin de message ou non. Puis, on transfère les données utiles à l'adresse indiquée par un champ de contrôle adresse.

On va maintenant détailler les différentes étapes permettant d'enregistrer les données utiles d'une cellule dans l'emplacement réservé à un message en cours de réception, cela de façon continue de manière à reconstituer directement le message dans la mémoire de travail.

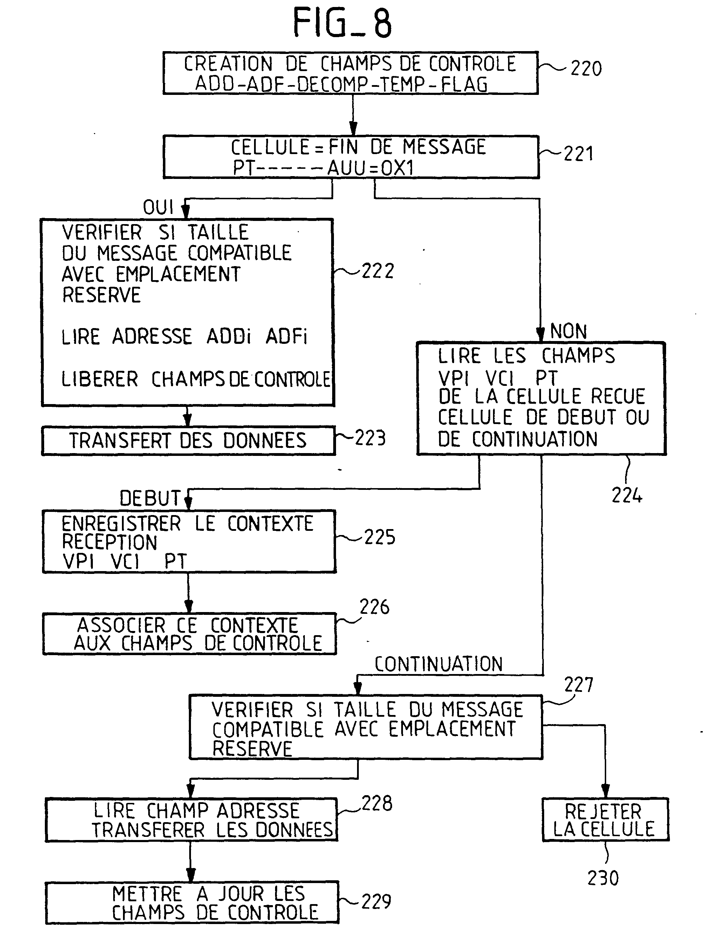

On pourra se reporter plus particulièrement au schéma de la figure 8.
Pour cela, on crée des champs de contrôle (bloc 220) définis ci-dessous :
- un champ d'adresse ADDi pour contenir l'adresse de début d'un emplacement mémoire,
- un champ d'adresse ADFi pour contenir l'adresse de fin de cet emplacement mémoire,
- un champ décompteur DECOMP associé à la taille de l'emplacement mémoire réservé pour contrôler la fin de réception du message,
- un champ de temporisation TEMP incrémenté à une valeur donnée et décrémenté par une horloge HL pour terminer la réception dans le cas ou l'information de fin est perdue,
- un champ de drapeau d'erreur FLAG pour indiquer l'apparition d'anomalies sur le message.

On lit le contenu du champ PT (bloc 221) pour savoir si la cellule est une cellule de fin de message,
a) dans le cas où la cellule n'est pas une cellule de fin de message mais, une cellule de début, (224),
   - on enregistre le contexte réception de cette cellule formé par le contenu des champs VPI, VCI, PT, (225),
   - on associe à ce contexte la valeur de champs de contrôle (226) parmi lesquels les champs d'adresses vont contenir une adresse de début ADDi et une adresse de fin ADFi de l'emplacement mémoire dans le lequel la cellule va pouvoir être inscrite,
   - on vérifie si la taille du message est compatible avec la taille de l'emplacement réservé, (227),
   - on lit le champ adresse début ADDi et on transfère les données utiles de la cellule à cette adresse dans la mémoire de travail, (228),
   - on met à jour les champs de contrôle et notamment le champ adresse fin (229).
b) dans le cas où la cellule n'est pas une cellule de fin, mais une cellule de continuation de message, (224),
   - on vérifie si la taille du message est compatible avec l'emplacement réservé, (227),
   - si ce n'est pas le cas on rejette la cellule (230)
   - si c'est le cas :
   - on lit les champs de contrôle adresses (228) associés aux champs VPI/VCI déjà enregistres pour ce message et on transfère les données utiles de la cellule à l'adresse de fin indiquée dans ces champs de contrôle,
   - on met à jour les champs de contrôle notamment l'adresse de fin (229).
c) dans le cas où la cellule est une cellule de fin de message (222),
   - on vérifie si la taille du message est compatible avec l'emplacement réservé,
   - on lit les champs de contrôle adresses pour connaître l'adresse de fin à laquelle doit être enregistrée la cellule et on transfère les données utiles de la cellule à cette adresse de fin dans la mémoire de travail,
   - on libère les champs de contrôle associés à ce message et on transfère la valeur de ces champs dans la mémoire de travail (MW)(223).

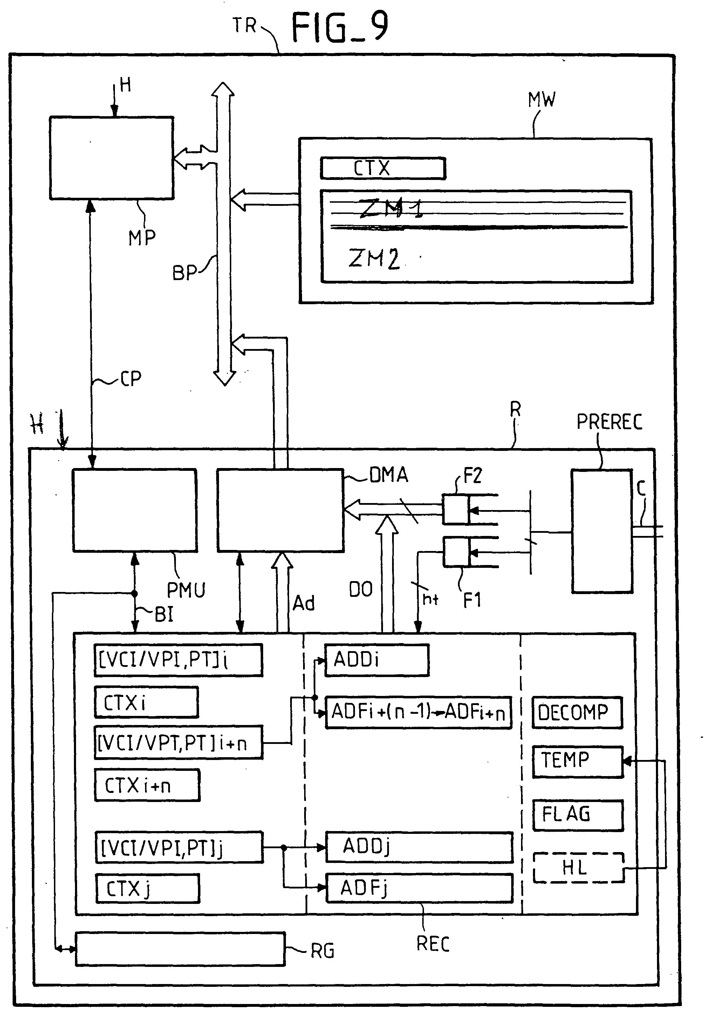

L'ensemble de réception R, représenté sur la figure 9, permet de mettre en oeuvre le procédé selon l'invention. Cet ensemble est apte à prendre en charge les transferts de données avec la mémoire de travail MW du terminal TR grâce à des accès DMA (Direct Memory Access) en rafale. Il permet de plus de réaliser des opérations sur plusieurs messages différents simultanément quelque soit la valeur de leur identifiant (VPI, VCI). L'ensemble permet la gestion des différents champs associés aux cellules, contrôle leur validité et communique ces différents résultats aux couches supérieures comme cela a été décrit.

Cet ensemble comporte un module REC pour transférer les données de la partie utile des cellules vers la mémoire de message MW, par bloc, en devenant maître des bus d'adresses et de données BP de la mémoire MW du système hôte.

L'unité PREREC prélève les données dans le circuit d'adaptation ATM (canal C), sépare les informations d'en-tête, des informations utiles (48 octets), versées dans la pile Fifo F2, extrait le contenu du champ PT pour connaître s'il s'agit d'une fin de message ou non afin de présenter à l'unité de réception REC une demande de traitement correspondant au cas d'espèce. Le contexte réception est en attente dans la pile Fifo F1.

Le bloc PREREC fonctionne avec une horloge octet réception délivrée par le circuit d'adaptation ATM. Le reste du circuit fonctionne avec l'horloge générale H.

L'unité REC utilise des moyens de mémorisation incluant une mémoire associative lui permettant de retrouver, pour un couple VPI/VCI donné, l'existence et le numéro d'un canal. Cette unité utilise aussi une RAM, adressée par le numéro ci-dessus, pour retrouver les contextes réception et, effectue, grâce à ces informations, une concaténation des segments d'un même message dans l'emplacement de la mémoire des messages réservé (écriture via le DMA). De plus, cette unité gère la temporisation pour la réception de chaque message.

L'unité DMA gère les opérations de lecture/écriture dans la mémoire des messages. Elle effectue deux sortes d'échanges :
- le plus prioritaire est l'écriture d'un segment d'information reçu : transfert de 48 octets, soit 12 mots qui sont pris dans la pile Fifo (données reçues) Fifo F2 sur le schéma. Lorsque le bloc réception décide de jeter une cellule, c'est le bloc DMA qui est chargé d'extraire 48 octets de la Fifo sans rien écrire dans la mémoire des messages.
- en deuxième priorité on trouve l'écriture d'un contexte réception dans l'emplacement tournant des contextes réception, soient 3 mots, lus dans la mémoire de contextes du bloc réception.

L'unité PMU assure l'interface entre le module R et le bus BP du MP-hôte, c'est à dire le pilotage des signaux bidirectionnels, l'exécution des opérations de lecture/écriture des registres demandés par le MP et des resets associés.

L'unité RG de registres comportes des registres de commande, d'interruption et de status communs à l'ensemble des unités.

Le bus Ad est utilisé par l'unité réception REC pour indiquer au DMA l'adresse de début de transfert : le bus DO sert à transmettre les données reçues (Fifo F2 vers DMA) ou les contextes réception (unité REC vers DMA). Les échanges ont lieu sur ce dernier bus au rythme sporadique de 25 Million de mots de 32 bits/seconde, soit 800 Mb/s en vitesse de pointe.

Entre les unités PREREC et les piles Fifos, les données sont échangées par octets au rythme maximal de 19,44 Mhz, soit 155,5 Mb/s.

Le bus BI permet au microprocesseur MP de lire ou d'écrire tous les registres internes.

Dans la Fifo F2, on stocke nx
(48 octets d'informations);

Dans la Fifo F1, on stocke nx
(le contexte réception), à savoir n fois :
- **VCI/VPI** : 16 bits/8 bits
- **T** : 1 bit (cellule reçue, ici à 1)
- **TM** : 1 bit (taille du message = taille maximale)
**au total : 26 bits.**

En pratique on prendra n=4, ce qui revient à stocker la partie utile et le contexte réception de 4 cellules dans les piles Fifo.

## Revendications

1. Procédé de traitement de données issues d'une couche d'adaptation à la transmission de messages sous la forme de flux de cellules sur un réseau de transfert asynchrone de type ATM, les cellules comportant un en-tête ayant un champ VPI/VCI suivi d'un champ information, caractérisé en ce que les cellules sont reçues par un terminal récepteur ayant une mémoire de travail et en ce qu'il comporte les étapes suivantes :
- Réserver un emplacement dans la mémoire de travail du terminal, d'une taille maximale donnée en fonction de l'information contenue par le champ VPI/VCI,
- Enregistrer de façon continue les cellules constitutives d'un même message à cet emplacement.

2. Procédé selon la revendication 1, caractérisé en ce que la mémoire de travail est divisée en au moins deux zones mémoire et en ce que les cellules sont sélectionnées en fonction du contenu de leur champ VPI/VCI pour être stockées dans l'une de ces zones.

3. Procédé selon la revendication 1 ou 2, caractérisé en ce que la réservation de l'emplacement consiste à définir une adresse de début et une adresse de fin et, à prévoir une zone de mémorisation pour enregistrer ces adresses dans des champs de contrôle d'adresse définis dans cette zone de mémorisation.

4. Procédé selon l'une quelconque des revendications précédentes, caractérisé en ce que l'enregistrement en continu dans la mémoire de travail comprend les étapes suivantes:
- Enregistrer dans la zone de mémorisation prévue un contexte réception de la cellule comportant le contenu des champs d'en-tête,
- Identifier la cellule par lecture de ces champs et comparaison de leur contenu au contenu des champs de messages déjà en cours de réception pour savoir si la cellule est une cellule de début,de continuation ou de fin de message,
- Transférer les données de la cellule dans la mémoire à l'emplacement indiqué par le contenu des champs de contrôle d'adresse.

5. Procédé selon l'une quelconque des revendications précédentes, caractérisé en ce qu'on associe les champs de contrôle aux champs d'en-tête enregistrés et formés des champs chemin virtuel VPI, voie virtuelle VCI et indicateur de type PT.

6. Procédé selon l'une quelconque des revendications précédentes, caractérisé en ce que les champs de contrôle créés comprennent :
- un champ d'adresse pour contenir l'adresse de début d'un emplacement mémoire,
- un champ d'adresse pour contenir l'adresse de fin de cet emplacement mémoire,
- un champ décompteur associé à la taille de l'emplacement mémoire réservé pour contrôler la fin de réception du message,
- un champ de temporisation incrémenté à une valeur donnée et décrémenté par une horloge pour terminer la réception dans le cas ou l'information de fin est perdue,
- un champ de drapeau d'erreur pour indiquer l'apparition d'anomalies sur le message.

7. Procédé selon l'une quelconque des revendications précédentes, caractérisé en ce que l'enregistrement des cellules constitutives d'un même message comporte les étapes suivantes :
- On lit le contenu du champ PT pour savoir si la cellule est une cellule de fin de message,
a) dans le cas où la cellule n'est pas une cellule de fin de message mais, une cellule de début,
- on enregistre le contexte réception de cette cellule formé par le contenu des champs VPI, VCI, PT,
- on associe à ce contexte la valeur de champs de contrôle parmi lesquels les champs d'adresses vont contenir une adresse de début ADDi et une adresse de fin ADFi de l'emplacement mémoire dans le lequel la cellule va pouvoir être inscrite,
- on vérifie si la taille du message est compatible avec la taille de l'emplacement réservé,
- on lit le champ adresse début ADDi et on transfère les données utiles de la cellule à cette adresse dans la mémoire de travail,
- on met à jour les champs de contrôle et notamment le champ adresse fin.
b) dans le cas où la cellule n'est pas une cellule de fin, mais une cellule de continuation de message,
- on vérifie si la taille du message est compatible avec l'emplacement réservé,
- on lit les champs de contrôle adresses associés au champs VPI/VCI déjà enregistrés pour ce message et on transfère les données utiles de la cellule à l'adresse de fin indiquée dans ces champs de contrôle,
- on met à jour les champs de contrôle notamment l'adresse de fin.
c) dans le cas où la cellule est une cellule de fin de message,
- on vérifie si la taille du message est compatible avec l'emplacement réservé,
- on lit les champs de contrôle adresses pour connaître l'adresse de fin à laquelle doit être enregistrée la cellule et on transfère les données utiles de la cellule à cette adresse de fin dans la mémoire de travail,
- on libère les champs de contrôle associés à ce message et on les transfère dans la mémoire de travail.

## Claims

1. Method for processing data from an adaptation layer for transmission of messages in the form of streams of cells in a network for asynchronous transfer of ATM type, the cells comprising a header having a VPI/VCI field followed by an information field, characterised in that the cells are received by a receiving terminal having a working memory and in that it comprises the following steps:
- reserving a location in the working memory of the terminal with a given maximum size according to the information contained in the VPI/VCI field;
- continuously recording the cells constituting a same message in that location.

2. Method according to claim 1, characterised in that the working memory is divided into at least two memory zones and in that the cells are selected according to the contents of their VPI/VCI field to be stored in one of these zones.

3. Method according to claim 1 or 2, characterised in that reserving the location consists in defining a start address and an end address and in providing a storage zone for recording these addresses in address checking fields defined in this storage zone.

4. Method according to any one of the preceding claims, characterised in that the continuous recording in the working memory comprises the following steps:
- recording a reception context for the cell comprising the contents of the header fields in the storage zone provided;
- identifying the cell by reading these fields and comparing their contents with the contents of the fields of messages already being received to establish if the cell is a message start, continuation or end cell;
- transferring the data of the cell to the memory in the location indicated by the contents of the address checking fields.

5. Method according to any one of the preceding claims, characterised in that the checking fields are linked to the header fields recorded and formed from the virtual path VPI, virtual channel VCI and type indicator PT fields.

6. Method according to any one of the preceding claims, characterised in that the checking fields created comprise:
- an address field to contain the start address of a memory location,
- an address field to contain the end address of this memory location,
- a countdown field linked to the size of the memory location reserved to check the end of reception of the message,
- a delay field incremented to a given value and decremented by a clock to end reception in the event of the end information being lost,
- an error flag field to indicate the appearance of anomalies in the message.

7. Method according to any one of the preceding claims, characterised in that the recording of the cells constituting a same message comprises the following steps:
- the contents of the field PT are read to establish if the cell is a message end cell,
a) if the cell is not a message end cell but a start cell,
- the reception context of this cell formed by the contents of the VPI, VCI, PT fields is recorded,
- this context is linked to the value of checking fields among which the address fields will contain a start address ADDi and an end address ADFi of the memory location in which the cell is to be written,
- a check is made to see if the size of the message is compatible with the size of the location reserved,
- the start address field ADDi is read and the useful data of the cell is transferred to this address in the working memory,
- the checking fields and notably the end address field are updated;
b) if the cell is not an end cell but a message continuation cell,
- a check is made to see if the size of the message is compatible with the location reserved,
- the address checking fields linked to the VPI/VCI fields already recorded for this message are read and the useful data of the cell is transferred to the end address indicated in these checking fields,
- the checking fields, notably the end address, are updated;
c) if the cell is a message end cell,
- a check is made to see if the size of the message is compatible with the location reserved,
- the address checking fields are read to establish the end address at which the cell is to be recorded and the useful data of the cell is transferred to this end address in the working memory,
- the checking fields linked to this message are released and transferred to the working memory.

## Patentansprüche

1. Verfahren zur Verarbeitung von Daten von einer Anpassungsschicht während der Übertragung von Nachrichten in Form einer Folge von Feldern über ein asynchrones Übertragungsnetz vom ATM-Typ, wobei die Felder einen Header umfassen, dem ein Informationsabschnitt folgt,
dadurch gekennzeichnet, daß
die Felder von einem Empfängeranschluß mit einem Arbeitsspeicher empfangen werden und daß es die folgenden Schritte umfaßt:
- Reservieren eines Platzes in dem Arbeitsspeicher des Anschlusses mit einer maximalen Größe, die in Abhängigkeit von der Information in dem Feld VPI/VCI gegeben ist,
- kontinuierliches Abspeichern der Felder, die zu einer Nachricht gehören, an diesem Platz.

2. Verfahren nach Anspruch 1, dadurch gekennzeichnet, daß der Arbeitsspeicher unterteilt ist in wenigstens zwei Speicherzonen und daß die Felder ausgewählt werden in Abhängigkeit von dem Inhalt ihres Abschnitts VPI/VCI, um in einer der Zonen abgelegt zu werden.

3. Verfahren nach Anspruch 1 oder 2, dadurch gekennzeichnet, daß die Reservierung des Platzes darin besteht, eine Anfangsadresse und eine Endadresse zu definieren und eine Speicherzone vorzusehen für das Abspeichern dieser Adressen in den Steuerabschnitten für die Adresse, die in dieser Speicherzone definiert sind.

4. Verfahren nach einem der vorangehenden Ansprüche, dadurch gekennzeichnet, daß das kontinuierliche Abspeichern in dem Arbeitsspeicher die folgenden Schritte umfaßt:
- Abspeichern in der Speicherzone eines Empfangstextes des Feldes mit dem Inhalt des Header-Abschnitts,
- Identifizieren der Zelle durch Lesen der Abschnitte und Vergleichen ihres Inhalts mit dem Inhalt von Nachrichtenabschnitten, die bereits empfangen sind, um festzustellen, ob das Feld ein Anfangsfeld, ein Fortsetzungsfeld oder ein Endfeld der Nachricht ist,
- Übertragen von Daten des Feldes in den Speicher an dem Platz, der angegeben ist durch den Inhalt der Steuerfelder für die Adresse.

5. Verfahren nach einem der vorangehenden Ansprüche, dadurch gekennzeichnet, daß man die Steuerabschnitte mit den abgespeicherten Header-Abschnitten aus Abschnitten des virtuellen Weges (VPI), des virtuellen Pfades (VCI) und des Indikatortyps verknüpft.

6. Verfahren nach einem der vorangehenden Ansprüche, dadurch gekennzeichnet, daß die erzeugten Steuerabschnitte umfassen:
- einen Adreßabschnitt für die Anfangsadresse eines Speicherplatzes,
- einen Adreßabschnitt für die Endadresse dieses Speicherplatzes,
- einen Zählerabschnitt für die Größe des Speicherplatzes, der für die Steuerung des Endes des Empfangs der Nachricht reserviert ist,
- einen Temporärabschnitt, der inkrementiert wird auf einen vorgegebenen Wert und dekrementiert wird durch einen Taktgeber, um den Empfang zu beenden, falls die Information über das Ende verloren geht,
- einen Fehler-Flag-Abschnitt für das Anzeigen von Anomalitäten in der Nachricht.

7. Verfahren nach einem der vorangehenden Ansprüche, dadurch gekennzeichnet, daß das Abspeichern von aufeinanderfolgenden Feldern der gleichen Nachricht die folgenden Schritte umfaßt:
- Lesen des Inhalts des Abschnitts PT, um festzustellen, ob dieses Feld ein Feld mit Ende der Nachricht ist,
a) für den Fall, daß das Feld nicht ein Feld mit dem Ende der Nachricht ist, sondern ein Feld mit dem Beginn ist,
- Abspeichern des Empfangstextes dieses Feldes, gebildet durch den Inhalt der Abschnitte VPI, VCI, PT,
- Verknüpfen dieses Textes mit dem Wert der Steuerabschnitte, unter welchen die Adreßabschnitte eine Adresse mit dem Anfang ADDi und eine Adresse mit dem Ende ADFi des Speicherplatzes beinhalten, in welchen das Feld geschrieben werden kann,
- Verifizieren der Größe der Nachricht, ob sie kompatibel ist mit der Größe des reservierten Platzes,
- Lesen des Anfangsadreßabschnittes ADDi und Transferieren der benötigten Daten des Feldes an diese Adresse in dem Arbeitsspeicher,
- Aktualisieren der Steuerabschnitte und insbesondere des Endadreßabschnitts,
b) für den Fall, daß das Feld nicht ein Feld mit dem Ende sondern ein Feld mit der Fortsetzung der Nachricht ist,
- Verifizieren der Größe der Nachricht, ob diese kompatibel mit dem reservierten Platz ist,
- Lesen der adressierten Steuerabschnitte, die mit den VPI/VCI-Abschnitten verknüpft sind und bereits abgespeichert wurden für diese Nachricht und Transferieren der benötigten Daten des Feldes an die Endadresse, die in diesen Steuerabschnitten angezeigt wird,
- Aktualisieren der Steuerabschnitte, und insbesondere der Endadresse,
c) in dem Fall, daß das Feld ein Feld mit dem Ende der Nachricht ist,
- Verifizieren der Größe der Nachricht, ob diese kompatibel ist mit dem reservierten Platz,
- Lesen der adressierten Steuerabschnitte, um die Adresse des Endes zu erfahren, an die das Feld geschrieben werden muß, und Transferieren der benötigten Daten der Zelle an diese Endadresse in dem Arbeitsspeicher,
- Freigeben der Steuerabschnitte, die mit dieser Nachricht verknüpft sind, und Transferieren in den Arbeitsspeicher.
